(19) Europäisches Patentamt
European Patent Office
Office européen des brevets

(11) **EP 1 886 810 A1**

(12) **EUROPEAN PATENT APPLICATION**

(43) Date of publication:
**13.02.2008 Bulletin 2008/07**

(51) Int Cl.:
**B32B 27/34** (2006.01)   **F16L 9/12** (2006.01)
**F16L 11/04** (2006.01)

(21) Application number: **07252805.2**

(22) Date of filing: **13.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **14.07.2006 JP 2006194927**

(71) Applicant: **Nitta Moore Company**
**Osaka 556-0022 (JP)**

(72) Inventors:
• **Manai, Ryoji**
**Nabari-shi**
**Mie (JP)**
• **Shimizu, Shoji**
**Nabari-shi**
**Mie (JP)**

(74) Representative: **Ward, David Ian**
**Marks & Clerk**
**Alpha Tower**
**Suffolk Street**
**Queensway**
**Birmingham B1 1TT (GB)**

(54) **Tube**

(57) A tube having high fuel permeation resistance and high flexibility is provided. The tube (11) includes a barrier layer (12) including metaxylylene group-containing polyamide resin and flexible resin which exhibits compatibility with metaxylylene group-containing polyamide resin and is softer than metaxylylene group-containing polyamide resin, and a polyamide resin layer (13). The flexible resin falls in a range from 10% to 30% by weight of the total amount of the barrier layer (12) and has a flexural modulus of lower than or equal to 2000 MPa, as measured according to ASTM D790 at 23 °C in an absolute dry condition.

FIG. 1

**EP 1 886 810 A1**

**Description**

BACKGROUND OF THE INVENTION

1. Field of the Invention

The present invention relates to a tube designed for use in, for example, transportation of a fuel such as alcohol, gasoline, and their mixture.

2. Description of the Related Art

A tube for transporting a fuel such as alcohol, gasoline, and a mixture thereof has been usedas fuel piping for automobiles or the like. As such a tube, for example, a tube made of metal can be given. However, the metal tube is susceptible to rust formation during a long-term use, and is also hard to be made lighter in weight and produced at reduced costs. In consequence, there are cases where a resin tube, for example, a tube made of a resin material such as polyamide resin is used as fuel piping for automobiles or the like. The resin tube is free from rust formation even during a long-term use, and also lends itself to weight reduction and cost reduction.

In the resin tube, however, in contrast to the metal tube, vapors from the fuel within the tube tend to permeate. That is, the degree of its resistance to fuel permeation is low. In a case where such a resin tube is used as fuel piping for automobiles, it becomes difficult to abide by regulations for automotive fuel evaporation that are expected to be stricter than ever. With this being the situation, in order to attain enhanced fuel permeation resistance, there has been used a multilayer resin tube having formed thereon a layer containing a material which is excellent in fuel permeation resistance. As the material which is excellent in fuel permeation resistance, for example, metaxylylene group-containing polyamide resin can be cited. In general, the materials having excellent fuel permeation resistance are mostly rigid materials. Therefore, the multilayer resin tube having formed thereon a layer containing a material having excellent fuel permeation resistance, while being able to offer enhanced fuel permeation resistance, exhibits low flexibility and is thus prone to cracking.

Another example of the resin tube of conventional art is described in Japanese Unexamined Patent Publication JP-A 4-272592 (1992). The fuel transporting tube disclosed in JP-A 4-272592 is composed of a layer of metaxylylene group-containing polyamide resin having a thickness of smaller than or equal to 0.3 mm and a layer of polyolefin-based resin.

According to JP-A 4-272592, with the provision of the metaxylylene group-containing polyamide resin layer, it is possible to obtain a tube having high fuel permeation resistance. As another advantage, the thickness of the metaxylylene group-containing polyamide resin layer is adjusted to be smaller than or equal to 0.3 mm. In this case, even if a layer of rigid resin such as metaxylylene group-containing polyamide resin is provided, it is possible to impart flexibility to the tube. However, occurrence of cracking could not be prevented properly simply by setting the thickness of the metaxylylene group-containing polyamide resin layer to be smaller than or equal to 0.3 mm.

SUMMARY OF THE INVENTION

It is an object of the invention to provide a tube having high fuel permeation resistance and high flexibility.
The invention provides a tube comprising:

at least a barrier layer that includes metaxylylene group-containing polyamide resin and flexible resin which exhibits compatibility with the metaxylylene group-containing polyamide resin and is softer than the metaxylylene group-containing polyamide resin,
wherein a content of the flexible resin falls in a range of from 10% to 30% by weight of a total amount of the barrier layer, and wherein the flexible resin has a flexural modulus of smaller than or equal to 2000 MPa, as measured in accordance with ASTM D790 at a temperature of 23°C in an absolute dry condition.

According to the invention, the tube comprises the barrier layer that includes metaxylylene group-containing polyamide resin and flexible resin which exhibits compatibility with the metaxylylene group-containing polyamide resin and is softer than the metaxylylene group-containing polyamide resin. Since the flexible resin exhibits compatibility with the metaxylylene group-containing polyamide resin and the content thereof falls in a range of from 10% to 30% by weight relative to the total amount of the barrier layer, even if the flexible resin is contained in the metaxylylene group-containing polyamide resin, neither the characteristics of the metaxylylene group-containing polyamide resin nor the characteristics of the flexible resin will be impaired. The flexible resin has a flexural modulus of smaller than or equal to 2000 MPa, as measured in accordance with ASTM D790 at a temperature of 23 °C in an absolute dry condition, and is softer than the metaxylylene group-containing polyamide resin. Accordingly, with the inclusion of the metaxylylene group-containing polyamide resin and the flexible resin, it is possible to attain enhanced flexibility without impairing high fuel permeation resistance provided by the metaxylylene group-containing polyamide resin. That is, by virtue of the barrier layer having high fuel permeation resistance and high flexibility, it is possible to obtain a tube having high fuel permeation resistance and high flexibility. In the present specification, the term "flexural modulus" refers to a flexural modulus as measured in accordance with ASTM (American Society for Testing and Materials) D790 at a temperature of 23 °C in an absolute dry condition.

In the invention, it is preferable that the thickness of the barrier layer is set to fall in a range of from 0.05 mm to 0.3 mm.

According to the invention, the thickness of the barrier layer is set to fall in a range of from 0.05 mm to 0.3 mm. The barrier layer such as shown hereinabove is able to offer high fuel permeation resistance so long as its thickness is set to be greater than or equal to 0.05 mm. Moreover, being formed as a thin layer having a thickness of smaller than or equal to 0.3 mm, the barrier layer is also able to offer sufficient flexibility. This makes it possible to obtain a tube having high fuel permeation resistance and high flexibility.

In the invention, it is preferable that the tube further comprises a polyamide resin layer containing polyamide resin.

According to the invention, the tube further comprises a polyamide resin layer containing polyamide resin. This makes it possible to keep the tube in shape without impairing high fuel permeation resistance and high flexibility provided by the barrier layer. Accordingly, there is obtained a tube having high fuel permeation resistance and high flexibility.

In the invention, it is preferable that an innermost layer of the tube is composed of a resin material which has been washed with hot water or alcohol.

According to the invention, an innermost layer is preferably composed of a resin material which has been washed with hot water or alcohol. In such a resin material, a substance of low molecular weight such as monomer and oligomer has been removed through the cleaning process. It is desirable to use, as the innermost layer, such a resin material in which a substance of low molecular weight has been removed rather than a resin material which has not been subjected to the hot water- or alcohol-using cleaning process and thus still contains a substance of low molecular weight. This is because, by doing so, it is possible to lessen the elution of a substance of low molecular weight into a fluid accommodated inside the tube.

In the invention, it is preferable that the resin material which has been washed with hot water or alcohol is either polyamide 11 or polyamide 12.

According to the invention, the resin material which has been washed with hot water or alcohol is preferably either polyamide 11 or polyamide 12.

In the invention, it is preferable that the innermost layer is made to exhibit electrical conductivity.

According to the invention, the innermost layer is preferably made to exhibit electrical conductivity. This makes it possible to obtain a tube having high anti-static properties that is capable of dissipating static electricity resulting from the passage of a fluid.

Furthermore, in the invention it is preferable that the flexible resin is any of polyamide resin, polyamide resin containing at least elastomer or rubber, and a mixture thereof.

According to the invention, the flexible resin is any of polyamide resin, polyamide resin containing at least elastomer and rubber, and a mixture thereof. In this case, a tube having high fuel permeation resistance and high flexibility is obtained.

In the invention, it is preferable that a certain part of the section of the tube taken along its length is processed into a corrugated contiguration.

According to the invention, a certain part of the section of the tube taken along its length is preferably processed into a corrugated configuration. This makes it possible to obtain a tube having high flexibility.

BRIEF DESCRIPTION OF THE DRAWINGS

Other and further objects, features, and advantages of the invention will be more explicit from the following detailed description taken with reference to the drawings wherein:

Fig. 1 is a partial cutaway sectional view of a tube according to an embodiment of the invention:
Fig. 2 is a schematic view showing the shape of a tube expanding jig; and
Fig. 3 is a view showing the relationship between the amount of permeation and the proportion of PA 6 content.

DETAILED DESCRIPTION

Now referring to the drawings, preferred embodiments of the invention are described below.

The invention is concerned with a tube, for example, a tube designed for use in the transportation of a fuel such as alcohol, gasoline, and a mixture thereof. The tube is suitable for use in fuel piping for an automobile and the like.

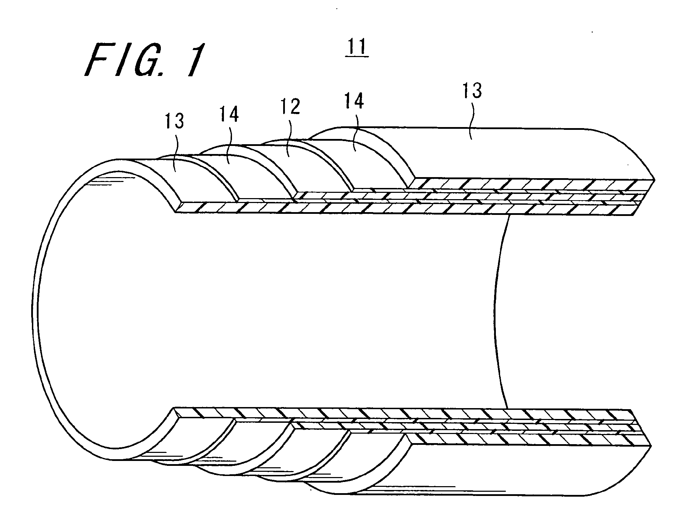

Fig. 1 is a partial cutaway sectional view of a tube 11 according to an embodiment of the invention. The tube 11 comprises a barrier layer 12, a polyamide resin layer 13, and a bonding layer 14. Specifically, the tube 11 is composed of, from the inside to the outside, the polyamide resin layer 13, the bonding layer 14, the barrier layer 12, the bonding layer 14, and the polyamide resin layer 13 in the order named.

The barrier layer 12 includes metaxylylene group-containing polyamide resin and flexible resin which exhibits compatibility with the metaxylylene group-containing polyamide resin and is softer than the metaxylylene group-containing polyamide resin.

The flexible resin exhibits compatibility with the metaxylylene group-containing polyamide resin. Therefore, even if the flexible resin is contained in the metaxylylene group-containing polyamide resin, neither the characteristics of the metaxylylene group-containing polyamide resin nor the characteristics of the flexible resin will be impaired. Accordingly, with the inclusion of the metaxylylene group-containing polyamide resin and the flexible resin, it is possible to attain enhanced flexibility without impairing high fuel permeation resistance provided by the metaxylylene group-containing polyamide resin. That is, the barrier layer 12 has both high fuel permeation resistance and high flexibility.

The polyamide resin layer 13 allows the tube 11 to be kept in shape without impairing high fuel permeation resistance and high flexibility provided by the barrier layer 12. The polyamide resin layer 13 is formed both on the inner side and on the outer side of the barrier layer 12 in such a manner that the barrier layer 12 is sandwiched between the two polyamide resin layers 13. By forming the polyamide resin layer 13 on the inner side of the barrier layer 12, not only it is possible to hold the shape of the tube 11, but it is also possible to prevent a fuel from making direct contact with the barrier layer 12 and thereby avoid fuel-induced deterioration in fuel permeation resistance, flexibility, and so forth. Moreover, by forming the polyamide resin layer 13 on the outer side of the barrier layer 12, not only it is possible to hold the shape of the tube 11, but it is also possible to prevent the barrier layer 12 from suffering from a flaw or the like damage and thus provide protection for the barrier layer 12. Note that, in a case where the barrier layer 12 has both high fuel permeation resistance and high flexibility and also has the property of holding the shape of the tube 11, the tube may be composed solely of the barrier layer 12.

The bonding layer 14 allows adhesion between the barrier layer 12 and the polyamide resin layer 13. Thereby, it is possible to obtain a highly durable tube in which its barrier layer 12 and polyamide resin layer 13 do not separate from each other even during a long-term use.

As described heretofore, with the provision of the barrier layer 12 and the polyamide resin layer 13, it is possible to obtain a tube having both high fuel permeation resistance and high flexibility.

The tube 11 may be composed of, from the inside to the outside, the polyamide resin layer 13, the bonding layer 14, and the barrier layer 12 in the order named. In another alternative, the tube 11 may be composed of, from the inside to the outside, the barrier layer 12, the bonding layer 14, and the polyamide resin layer 13 in the order named.

The bonding layer 14 may be provided on an as needed basis. Therefore, the tube may be constructed by laminating the barrier layer 12 and the polyamide resin layer 13 together in a direct manner without using the bonding layer 14.

The tube 11 may be produced by any given manufacturing method so long as it can be constructed of the lamination of the barrier layer 12, the polyamide resin layer 13, and the bonding layer 14 as shown in Fig. 1. For example, a simultaneous extrusion molding technique can be adopted for the production of the tube 11.

Moreover, the tube 11 may be so designed that a certain part of the section taken along its length is processed into a corrugated configuration. By doing so, a tube of high flexibility can be obtained. The tube having a corrugation-processed portion means, for example, the tube 11 having a corrugated vertical cross-sectional profile, the corrugated configuration of which is formed at a location which is supposed to be bent so as to extend over the entire peripheral surface of the tube 11. The tube 11 may also be so designed that only the outermost layer is processed into a corrugated configuration or so designed that all of the layers are processed into a corrugated configuration. Further, the tube 11 may be so designed that a certain part or the whole of the peripheral surface in its axial section is processed into a corrugated configuration. In forming the corrugated configuration, its pitch and height can be selected appropriately in accordance with the size of the tube and so forth.

The amount of the flexible resin to be blended is adjusted to fall in a range of from 10% to 30% by weight, and more preferably from 15% to 30% by weight, relative to the total amount of the barrier layer 12. If the content of the flexible resin is less than 10% by weight, the effect produced by adding the flexible resin will be inadequate. In consequence whereof the flexibility of the tube 11 is so low that cracking may occur. On the other hand, if the content of the flexible resin is greater than 30% by weight, the crystallizability of the resin material constituting the barrier layer 12 will be deteriorated. In consequence whereof both the characteristics of the metaxylylene group-containing polyamide resin and the characteristics of the flexible resin are impaired. Thus, it becomes difficult to obtain a tube having both high fuel permeation resistance and high flexibility.

The flexible resin is made to have a flexural modulus of smaller than or equal to 2000 MPa, and more preferably a flexural modulus of smaller than or equal to 1000 MPa, as measured in accordance with ASTM D790 at a temperature of 23 °C in an absolute dry condition. If the flexural modulus is higher than 2000 MPa, the flexibility will be inadequate. Thus, in the case of setting the flexural modulus of the flexible resin to be smaller than or equal to 2000 MPa, by blending the flexible resin into the metaxylylene group-containing polyamide resin, it is possible for the flexible resin to offer high flexibility.

The thickness of the barrier layer 12 is preferably adjusted to fall in a range of from 0. 05 mm to 0.3 mm, and more preferably in a range of from 0.1 mm to 0.2 mm. If the thickness is less than 0.05 mm, the fuel permeation resistance will be inadequate. On the other hand, if the thickness is greater than 0.3 mm, the flexibility will be inadequate. Accordingly, by setting the thickness of the barrier layer 12 to be greater than or equal to 0.05 mm, it is possible for the barrier layer 12 to offer high fuel permeation resistance. Moreover, being formed as a thin layer having a thickness of smaller than or equal to 0.3 mm, the barrier layer 12 is able to offer sufficient flexibility. As a result, it is possible to obtain a tube having both high fuel permeation resistance and high flexibility.

While the flexible resin may be subjected to a softening treatment with use of a plasticizer, it is desirable to avoid such a plasticizer-using softening treatment. A tube designed for use in automotive fuel piping is largely used in a state in which it is molded to form a bend. In general, such a tube is subjected to a heat treatment at a high temperature and is thereafter cooled down, in the course of which a bend is formed in the tube. In a case where the resin has been subjected to the plasticizer-using softening treatment, during the aforementioned heat treatment at a high temperature, the plasticizer is volatilized. This could lead to impairment in flexibility. In forming the tube, usually, by using the flexible resin on which such a plasticizer-using softening treatment has not been performed, it is possible for the tube to offer flexibility higher than that obtained in the case of using the resin on which the plasticizer-using softening treatment has been performed. Accordingly, rather than the flexible resin whose flexural modulus has been decreased by the addition of a plasticizer, it is desirable to use the flexible resin whose flexural modulus has been decreased by the combined use of a plasticizer, rubber, and elastomer. It is more desirable to use the flexible resin whose flexural modulus has been decreased by the addition of at least rubber and elastomer without adding any plasticizer.

An innermost layer is preferably composed of a resin material which has been washed with hot water or alcohol. In such a resin material, a substance of low molecular weight such as monomer and oligomer has been removed through the cleaning process. It is desirable to use, as the innermost layer, such a resin material in which a substance of low molecular weight has been removed rather than a resin material which has not been subjected to the hot water- or alcohol-using cleaning process and thus still contains a substance of low molecular weight. This is because, by doing so, it is possible to lessen the elution of a substance of low molecular weight into a fluid accommodated inside the tube such as a fuel.

In a case where the polyamide resin layer 13 is used as the innermost layer, the polyamide resin constituting the polyamide resin layer 13 formed on the inner side of the barrier layer 12 is preferably of a resin material which has been washed with hot water or alcohol. In such a resin material, a substance of low molecular weight such as monomer and oligomer has been removed through the cleaning process. The use of such a polyamide resin is desirable, because, in this case, even if a fuel makes direct contact with the polyamide resin layer 13, it never occurs that a substance of low molecular weight contained in the polyamide resin is eluted into the fuel.

Moreover, the polyamide resin constituting the polyamide resin layer 13 formed on the outer side of the barrier layer 12 may be of a resin material which has been washed with hot water or alcohol.

In a case where the barrier layer 12 is used as the innermost layer, the flexible resin is preferably of a resin material which has been washed with hot water or alcohol. In such a flexible resin, a substance of low molecular weight such as monomer and oligomer has been removed through the cleaning process. The use of the flexible resin is desirable, because, in this case, even if a fuel makes direct contact with the barrier layer 12, it never occurs that a substance of low molecular weight contained in the flexible resin is eluted into the fuel.

Needless to say, although those polyamide resin layers 13 are each preferably composed of a resin material which has been washed with hot water or alcohol, the resin material in use is not limited thereto.

Moreover, it is more preferable that the resin material which has been washed with hot water or alcohol is either polyamide 11 or polyamide 12.

Further, the innermost layer is preferably made to exhibit electrical conductivity. This makes it possible to obtain a tube having high anti-static properties that is capable of dissipating static electricity resulting from the passage of a fluid. Such an electrically conductive layer is realized by blending an electrically conductive material into the resin for constituting the layer. For example, the layer is made to have a surface resistivity of lower than or equal to $10^6$ ($\Omega$/sq). As the electrically conductive material, for example, carbon particles such as carbon black can be cited.

Regarding the metaxylylene group-containing polyamide resin contained in the barrier layer 12, any of known polyamide resin materials may be used so long as a metaxylylene group is included therein. A cited example is a polymer which contains, in a molecular chain, at least 70 mol % or above of a structural unit formed of metaxylylene diamine or mixed xylylene diamine including metaxylylene diamine and paraxylylene diamine of 30% by weight or below relative to the entire amount of xylylene diamine and $\alpha,\omega$-aliphatic dicarboxylic acid having a carbon number ranging from 4 to 10.

The examples of such a polymer include a homopolymer such as polymetaxylylene adipamide, polymetaxylylene sebacamide, and polymetaxylylene superamide, a copolymer such as a metaxylylene/paraxylylene adipamide copolymer, a metaxylylene/paraxylylene pimeramide copolymer, a metaxylylene/paraxylyJ.ene azelamide copolymer, and a copolymer obtained through copolymerization of a component of such a homopolymer or copolymer with aliphatic diamine such as hexamethylene diamine, alicyclic diamine such as piperazine, aromatic diamine such as para-bis-(2-amino ethyl) benzene, aromatic dicarboxylic acid such as terephthalic acid, lactams such as ε-caprolactam, ω-amino carboxylic acid such as γ-aminoheptanic acid, and aromatic amino carboxylic acid such as para-amino methyl benzoic acid. In the aforementioned copolymers, the content of the paraxylylene diamine is less than or equal to 30% by weight of the total amount of the xylylene diamine. Moreover, the content of the structural unit formed of the xylylene diamine and the aliphatic dicarboxylic acid is at least 70 mol % or above in the molecular chain.

As the flexible resin contained in the barrier layer 12, any of known resin materials may be used so long as it exhibits compatibility with the metaxylylene group-containing polyamide resin and is softer than the metaxylylene group-containing polyamide resin. For example, a polyamide resin can be cited. The examples of the polyamide resin include homopolyamide, copolyamide, and an admixture thereof. The examples of the homopolyamide include polycapramide (nylon 6), poly-ω-aminohepetanic acid (nylon 7), poly-ω-aminononanic acid (nylon 9), polyundecanamide (nylon 11), polylaurynlactam (nylon 12), polyethylene diamine azipamide (nylon 2, 6), polytetramethylene azipamide (nylon 4, 6), polyhexamethylene azipamide (nylon 6, 6), polyhexamethylene sebacamide (nylon 6, 10), polyhexamethylene dodecamide (nylon 6, 12), polyoctamethylene azipamide (nylon 8, 6), polydecamethylene azipamide (nylon 10, 6), polydecamethylene sebacamide (nylon 10, 10), polydodecamethylene dodecamide (nylon 12, 12), a polycondensate of nonamethylene diamine and terephthalic acid (nylon 9T), and polyphthalamide (PPA). Moreover, the examples of the copolyamide include a caprolactam/laurynlactam copolymer, a caprolactam/hexamethylene diammonium azipate copolymer, a laurynlactam/hexamethylene diammonium azipate copolymer, a hexamethylene diammonium azipate/hexamethylene diammonuim sepacate copolymer, an etylene diammonium azipate/hexamethylene diammonium azipate copolymer, and a caprolactam/hexamethylene diammonium azipate/hexamethylene diammonium sepacate copolymer.

Moreover, in order to impart flexibility, the polyamide resin may be added with a plasticizer or an impact resistance improver such as rubber and elastomer. These substances may be used either individually or in mixtures with each other. Preferably, the amount of the plasticizer to be added is adjusted to be as small as possible, and more preferably the plasticizer should not be added.

The examples of the plasticizer include higher alcohols, a sulfonic acid amide derivative, a sulfonic acid ester derivative, a phosphoric acid ester derivative, a phosphazene derivative, a carboxylic acid amide derivative, and a carboxylic acid ester derivative.

The examples of the impact resistance improver include a (ethylene and/or propylene) · α-olefin-based copolymer, a (ethylene and/or propylene) · (α,β-unsaturated carboxylic acid and/or unsaturated carboxylic acid ester)-based copolymer, an ionomer copolymer, and an aromatic vinyl compound · conjugated diene compound-based block copolymer. These substances may be used either individually or in mixtures with each other.

Moreover, in order to impart various performance capabilities to the polyamide resin, additives such as a heat-resistance stabilizer, a coloring agent, a processing aid, an ultraviolet absorbent, and a nucleator agent can be added.

The polyamide resin layer 13 may be composed of the same polyamide resin as the one used as the flexible resin contained in the barrier layer 12.

Moreover, the polyamide resin material to be applied to the inner layer and the polyamide resin material to be applied to the outer layer may be so selected as to be different from each other. In order to impart various performance capabilities to these polyamide resin materials, additives such as an antistatic agent, an abrasion-resistance improver, and an oil solution can be added.

Moreover, as the resin constituting the bonding layer 14, any of known resin materials may be used so long as it lends itself to adhesion between the barrier layer 12 and the polyamide resin layer 13. For example, polyolefin resin and polyamide resin can be cited.

The examples of the polyolefin resin include: an olefin polymer such as polyethylene, polybutadiene, polyisoprene, polyisobutylene, polybutylene, polymethylpentene, polypropylene, polyterpen resin, polybutene, and ethylene-butadiene copolymer; an α olefin-based copolymer obtained by copolymerizing two or three or more kinds of ethylene, propylene, 1-butene, 1-hexene, 4-methyl-1-pentene, 1-decen, 1-hexadecen, and 1-icocen; an acid denatured olefin polymer or acid denatured α olefin-based copolymer obtained through graft copolymerization of the aforementioned olefin polymer or α olefin-based copolymer with unsaturated monocarboxylic acid such as acrylic acid, methacrylic acid, and α-methylacrylic acid, unsaturated dicarboxylic acid such as maleic acid, fumaric acid, itaconic acid, citraconic acid, tetrahydrophthalic acid, methyl tetrahydrophthalic acid, nadic acid, and methyl nadic acid, or derivatives of the aforementioned unsaturated monocarboxylic or dicarboxylic acid such as acid halide, amide, imide, anhydride, and ester; and a copolymer of those acid denatured α olefin-based copolymer and diene-based components. Out of the aforementioned polyolefin-based resin materials, either one kind alone or a mixture of two or more kinds may be used. Moreover, the material for use does not have to be particularly limited to thermoplastic resin, and therefore cross-linked polyolefin resin such as cross-linked polyethylene may also be used. A cited example is water cross-linked polyolefin, namely a polyolefin obtained by copolymerizing or grafting a compound containing a silyl group possessing a hydrolyzable organic group, which is capable of crosslinking by the action of water in the presence of silanol condensation catalyst.

As the polyamide resin, the same as the one used as the flexible resin contained in the barrier layer 12 can be used.

It is also preferable that all of the resin materials constituting the tube 11 are of polyamide-based resin such as the polyamide resin and the metaxylylene group-containing polyamide resin. In this case, the constituent layers are allowed to adhere to each other readily, whereby making it possible to obtain a tube having high durability.

(Example)

Hereinafter, the invention will be concretively explained byway of Examples and Comparative Examples. Examples 1 through 25 and Comparative Examples 1 through 7 are each designed as a tube having a structure as shown in Fig. 1. The tube, which is 8 mm in outside diameter and 6 mm in inside diameter, was produced by means of simultaneous extrusion molding. The individual layers of the tubes are formed in conformity with the resin (materials) and thicknesses (wall thicknesses) listed in Table 1.

Moreover, the layers are defined, from the inside to the outside of the tube, as a first layer, a second layer, a third layer, a fourth layer, and a fifth layer, respectively. The third layer corresponds to the barrier layer 12, the first and fifth layers correspond to the polyamide resin layer 13, and the second and fourth layers correspond to the bonding layer 14.

The tube of Comparative Example 6 is made to have neither the fourth layer nor the fifth layer. The other layers thereof are formed in conformity with the resin (materials) and thicknesses (wall thicknesses) listed in Table 1. The tube of Comparative Example 7 is composed solely of the first layer. The first layer is formed in conformity with the resin (material) and thickness (wall thickness) listed in Table 1.

Table 1

| | | First layer | | Second layer | | Third layer | | | | | Fourth layer | | Fifth layer | |
|---|---|---|---|---|---|---|---|---|---|---|---|---|---|---|
| | | | | | | MXD 6:PA 6 blending ratio (weight %) | | Wall thickness (mm) | Kind of PA 6 blended | | | | | |
| | | Material | Wall thickness (mm) | Material | Wall thickness (mm) | MXD 6 | PA 6 | | Elastic modulus (MPa) | Addition of plasticizer | Material | Wall thickness (mm) | Material | Wall thickness (mm) |
| Ex. 1 | | PA 11 | 0.35 | modified PP | 0.1 | 90 | 10 | 0.1 | 1600 | Absent | modified PP | 0.1 | PA 11 | 0.35 |
| Ex. 2 | | PA 11 | 0.35 | modified PP | 0.1 | 85 | 15 | 0.1 | 1600 | Absent | modified PP | 0.1 | PA 11 | 0.35 |
| Ex. 3 | | PA 11 | 0.35 | modified PP | 0.1 | 80 | 20 | 0.1 | 1600 | Absent | modified PP | 0.1 | PA 11 | 0.35 |
| Ex. 4 | | PA 11 | 0.35 | modified PP | 0.1 | 70 | 30 | 0.1 | 1600 | Absent | modified PP | 0.1 | PA 11 | 0.35 |
| Ex. 5 | | PA 11 | 0.25 | modified PP | 0.1 | 90 | 10 | 0.3 | 1600 | Absent | modified PP | 0.1 | PA 11 | 0.25 |
| Ex. 6 | | PA 11 | 0.25 | modified PP | 0.1 | 85 | 15 | 0.3 | 1600 | Absent | modified PP | 0.1 | PA 11 | 0.25 |
| Ex. 7 | | PA 11 | 0.25 | modified PP | 0.1 | 80 | 20 | 0.3 | 1600 | Absent | modified PP | 0.1 | PA 11 | 0.25 |
| Ex. 8 | | PA 11 | 0.25 | modified PP | 0.1 | 70 | 30 | 0.3 | 1600 | Absent | modified PP | 0.1 | PA 11 | 0.25 |
| Ex. 9 | | PA 11 | 0.35 | modified PP | 0.1 | 90 | 10 | 0.1 | 520 | Absent | modified PP | 0.1 | PA 11 | 0.35 |
| Ex. 10 | | PA 11 | 0.35 | modified PP | 0.1 | 85 | 15 | 0.1 | 520 | Absent | modified PP | 0.1 | PA 11 | 0.35 |
| Ex. 11 | | PA 11 | 0.35 | modified PP | 0.1 | 80 | 20 | 0.1 | 520 | Absent | modified PP | 0.1 | PA 11 | 0.35 |
| Ex. 12 | | PA 11 | 0.35 | modified PP | 0.1 | 70 | 30 | 0.1 | 520 | Absent | modified PP | 0.1 | PA 11 | 0.35 |
| Ex. 13 | | PA 11 | 0.25 | modified PP | 0.1 | 90 | 10 | 0.3 | 520 | Absent | modified PP | 0.1 | PA 11 | 0.25 |
| Ex. 14 | | PA 11 | 0.25 | modified PP | 0.1 | 85 | 15 | 0.3 | 520 | Absent | modified PP | 0.1 | PA 11 | 0.25 |
| Ex. 15 | | PA 11 | 0.25 | modified PP | 0.1 | 80 | 20 | 0.3 | 520 | Absent | modified PP | 0.1 | PA 11 | 0.25 |
| Ex. 16 | | PA 11 | 0.25 | modified PP | 0.1 | 70 | 30 | 0.3 | 520 | Absent | modified PP | 0.1 | PA 11 | 0.25 |

| | Material | Wall thickness (mm) | Material | Wall thickness (mm) | (conductive) | (value) | Wall thickness (mm) | (ratio) | (ratio) | Material | Wall thickness (mm) | Material | Wall thickness (mm) |
|---|---|---|---|---|---|---|---|---|---|---|---|---|---|
| Ex. 17 | PA 11 | 0.25 | PA 6/12 | 0.1 | Absent | 1600 | 0.3 | 10 | 90 | PA 6/12 | 0.1 | PA 11 | 0.25 |
| Ex. 18 | PA 11 | 0.25 | PA 6/12 | 0.1 | Absent | 1600 | 0.3 | 20 | 80 | PA 6/12 | 0.1 | PA 11 | 0.25 |
| Ex. 19 | PA 11 | 0.25 | PA 6/12 | 0.1 | Absent | 1600 | 0.3 | 30 | 70 | PA 6/12 | 0.1 | PA 11 | 0.25 |
| Ex. 20 | PA 11 | 0.35 | modified PP | 0.1 | Present | 600 | 0.1 | 30 | 70 | modified PP | 0.1 | PA 11 | 0.35 |
| Ex. 21 | PA 11 | 0.35 | modified PP | 0.1 | Present | 600 | 0.1 | 10 | 90 | modified PP | 0.1 | PA 11 | 0.35 |
| Ex. 22 | PA 11 | 0.3 | modified PP | 0.1 | Absent | 1600 | 0.2 | 10 | 90 | modified PP | 0.1 | PA 11 | 0.3 |
| Ex. 23 | PA 11 | 0.3 | modified PP | 0.1 | Absent | 1600 | 0.2 | 20 | 80 | modified PP | 0.1 | PA 11 | 0.3 |
| Ex. 24 | PA 11 | 0.3 | modified PP | 0.1 | Absent | 1600 | 0.2 | 30 | 70 | modified PP | 0.1 | PA 11 | 0.3 |
| Ex. 25 | PA 11 | 0.35 | modified PP | 0.1 | Absent | 1600 | 0.1 | 10 | 90 | modified PP | 0.1 | Low oligomer PA 11 | 0.35 |
| Comp. Ex. 1 | PA 11 | 0.35 | modified PP | 0.1 | | | 0.1 | 0 | 100 | modified PP | 0.1 | PA 11 | 0.35 |
| Comp. Ex. 2 | PA 11 | 0.35 | modified PP | 0.1 | Absent | 2500 | 0.1 | 10 | 90 | modified PP | 0.1 | PA 11 | 0.35 |
| Comp. Ex. 3 | PA 11 | 0.35 | modified PP | 0.1 | Absent | 2500 | 0.1 | 20 | 80 | modified PP | 0.1 | PA 11 | 0.35 |
| Comp. Ex. 4 | PA 11 | 0.35 | modified PP | 0.1 | Absent | 1600 | 0.1 | 5 | 95 | modified PP | 0.1 | PA 11 | 0.35 |
| Comp. Ex. 5 | PA 11 | 0.25 | modified PP | 0.1 | Absent | 1600 | 0.1 | 5 | 95 | modified PP | 0.1 | ETFE | 0.25 |
| Comp. Ex. 6 | ETFE | 0.2 | ETFE+PA 12 | 0.1 | | PA 12 | 0.7 | | | | | PA 11 | 0.2 |
| Comp. Ex. 7 | PA 11 | 1 | | | | | | | | | | PA 11 | 1 |

PA 11 used for the first layer in Examples 1 through 24 and Comparative Examples 1 through 5 and 7 refers to Nylon 11 (Rilsan BESN Noir P20 TL manufactured by Arkema, Inc.).

Low oligomer PA 11 used for the first layer in Example 25 refers to Nylon 11 (Rilsan BESN Noir P20 TL manufactured by Arkema, Inc.) which has been washed with alcohol in the stage of raw-material production.

ETFE used for the first layer in Comparative Example 6 refers to a tetrafluoroethylene/ethylene copolymer (NEOFLON EP 610 manufactured by Daikin Industries, Ltd).

Modified PP used for the second layer in Examples 1 through 16 and 20 through 25, and Comparative Examples 1 through 5, as well as for the fourth layer in Examples 1 through 16 and 20 through 25, and Comparative Examples 1 through 5, refers to modified PP polypropylene (ADMER QF 500 manufactured by Mitsui Chemicals, Inc.).

The resin (PA 12 + ETFE) used for the second layer in Comparative Example 6 refers to an alloy of Nylon 12 and a tetrafluoroethylene/ethylene copolymer (NEOFLON EA-LR 43 manufactured by Daikin Industries, Ltd).

PA 6/12 used for the second layer and the fourth layer in Examples 17 through 19 refers to Nylon 6/12 (UBE Nylon 7034U manufactured by Ube Industries, Ltd).

MXD 6 used for the third layer in Examples 1 through 25 and Comparative Examples 1 through 5 refers to polymetaxylylene adipamide (MX Nylon S6121 manufactured by Mitsubishi Gas Chemical Company, Inc.)

PA 6 used for the third layer in Examples 1 through 8, 17 through 19, and 22 through 25, and Comparative Examples 4 and 5 refers to Nylor. 6 (Amilan UTN 141 manufactured by Toray Industries, Inc.) having a flexural modulus equivalent to 1600 MPa, as measured in accordance with ASTM D790 at a temperature of 23 °C in an absolute dry condition.

PA 6 used for the third layer in Examples 9 through 16 refers to Nylon 6 (ZYTEL ST811HS manufactured by Dupont) having a flexural modulus equivalent to 520 MPa, as measured in accordance with ASTM D7 90 at a temperature of 23°C in an absolute dry condition.

PA 6 used for the third layer in Examples 20 and 21 refers to Nylon 6 (UBE Nylon 1024 JI manufactured by Ube Industries, Ltd) having a flexural modulus equivalent to 600 MPa, as measured in accordance with ASTM D790 at a temperature of 23 °C in an absolute dry condition.

PA 6 used for the third layer in Comparative Examples 2 and 3 refers to Nylon 6 (UBE Nylon 1030B manufactured by Ube Industries, Ltd) having a flexural modulus equivalent to 2500 MPa, as measured in accordance with ASTM D790 at a temperature of 23 °c in an absolute dry condition.

PA 12 used for the third layer in Comparative Example 6 refers to Nylon 12 (UBESTA 3030 MI1 manufactured by Ube Industries, Ltd) .

PA 11 used for the fifth layer in Examples 1 through 25 and Comparative Examples 1 through 5 refers to Nylon 11 (Rilsan BESN Noir P40 TL manufactured by Arkema, Inc.).

At the outset, a test of cracking resistance through tube expansion and a test of impact resistance under low temperature conditions have been conducted on each of Examples 1 through 21 and Comparative Examples 1 through 5 in the following manner.

[Expanded tube cracking resistance test]

Firstly, a tube cut to a length of 150 mm is subjected to a heat treatment at 150 °C for 30 minutes with use of an air oven. The tube taken out of the air oven is left to cool at a room temperature (23 °C) for 30 minutes. In this way, a heat-treated tube is obtained. After that, with use of the heat-treated tube, cracking resistance tests are performed under room temperature (23 °C) and 0 °C conditions in the following manner.

(Test at room temperature)

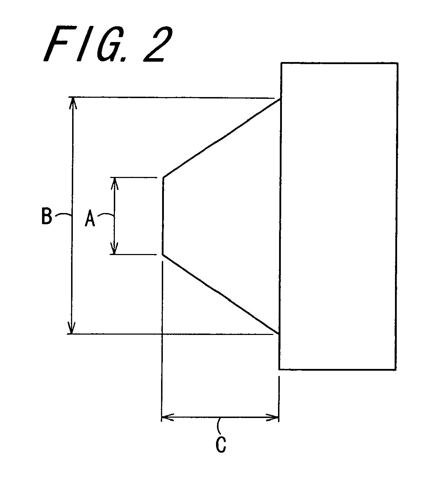

The tube which has been heat-treated in the above-described manner is left standing in a chamber with constant temperature and humidity under the conditions of a room temperature (23 °C) and a relative humidity of 50 RH% for 1 hour. After that, a tube expanding jig as shown in Fig. 2 is inserted into one end of the tube. In this state, the presence or absence of cracking in the tube is confirmed. The test results are given in Table 2.

fig. 2 is a schematic view showing the shape of the tube expanding jig. As shown in Fig. 2, the tube expanding jig is provided with a projection having the shape of a frustum of a cone. This truncated cone-shaped projection is 4 mm in minimum diameter A, 12 mm in maximum diameter B, and 7.3 mm in height C. The tube expanding jig is inserted into one end of the tube from its top side to bottom side.

(Test at 0 °C)

The tube which has been heat-treated in the above-described manner is left standing in a 0 °C environmental bath for 1 hour. After that, the tube expanding jig shown in Fig. 2 is inserted into one end of the tube. In this state, the presence or absence of cracking in the tube is confirmed. The test results are given in Table 2.

[Cold temperature impact test]

In the cold temperature impact test, cold temperature impact resistance measurement is carried out by a method in keeping with SAE J2260 ('96 NOV) (impacted level: 305 mm). Then, by using the SAE J2260 (' 96 NOV)-compliant method, provided that the impacted level shall be changed from 305 mm to 610 mm, additional cold temperature impact resistance measurement is carried out. The test results are given in Table 2.

Table 2

| | Expanded tube cracking resistance test (number of broken pieces/ number of pieces tested) | | Cold temperature impact test (number of broken pieces/ number of pieces tested) | |
|---|---|---|---|---|
| | Test atmosphere temperature | | Impacted level | |
| | 23 °C | 0 °C | 305 mm | 610 mm |
| Ex. 1 | 0/10 | 7/10 | 0/5 | 0/5 |
| Ex. 2 | 0/10 | 0/10 | 0/5 | 0/5 |
| Ex. 3 | 0/10 | 0/10 | 0/5 | 0/5 |
| Ex. 4 | 0/10 | 0/10 | 0/5 | 0/5 |
| Ex. 5 | 0/10 | 10/10 | 0/5 | 5/5 |
| Ex. 6 | 0/10 | 0/10 | 0/5 | 0/5 |
| Ex. 7 | 0/10 | 0/10 | 0/5 | 0/5 |
| Ex. 8 | 0/10 | 0/10 | 0/5 | 0/5 |
| Ex. 9 | 0/10 | 0/10 | 0/5 | 0/5 |
| Ex. 10 | 0/10 | 0/10 | 0/5 | 0/5 |
| Ex. 11 | 0/10 | 0/10 | 0/5 | 0/5 |
| Ex. 12 | 0/10 | 0/10 | 0/5 | 0/5 |
| Ex. 13 | 0/10 | 0/10 | 0/5 | 0/5 |
| Ex. 14 | 0/10 | 0/10 | 0/5 | 0/5 |
| Ex. 15 | 0/10 | 0/10 | 0/5 | 0/5 |
| Ex. 16 | 0/10 | 0/10 | 0/5 | 0/5 |
| Ex. 17 | 0/10 | 10/10 | 0/5 | 5/5 |
| Ex. 18 | 0/10 | 0/10 | 0/5 | 0/5 |
| Ex. 19 | 0/10 | 0/10 | 0/5 | 0/5 |
| Ex. 20 | 0/10 | 0/10 | 0/5 | 0/5 |
| Ex. 21 | 6/10 | 10/10 | 0/5 | 0/5 |
| Comp. Ex. 1 | 10/10 | 10/10 | 5/5 | 5/5 |
| Comp. Ex. 2 | 10/10 | 10/10 | 3/5 | 5/5 |
| Comp. Ex. 3 | 5/10 | 10/10 | 0/5 | 2/5 |
| Comp. Ex. 4 | 4/10 | 10/10 | 0/5 | 2/5 |
| Comp. Ex. 5 | 8/10 | 10/10 | 4/5 | 5/5 |

As will be understood from Table 2, the tube provided with the barrier layer formed by blending the flexible resin (PA 6) having a flexural modulus of lower than or equal to 2000 MPa into the metaxylylene group-containing polyamide resin (MXD 6) in such a manner that the content of the flexible resin falls in a range of from 10% to 30% by weight relative to the total amount of the barrier layer (Example) is superior to Comparative Example in terms of the results of the expanded tube cracking resistance test and the cold temperature impact test.

To be specific, the following points (1) through (3) will be found out by making a comparison between Example and Comparative Example.

(1) Example which employs MXD 6 in admixture with PA 6 has the advantage over Comparative Example.

This is apparent from the results of the expanded tube cracking resistance test (23°C) and the cold temperature impact test (305 mm, 610 mm). That is, all of the test pieces of Comparative Example 1 free of the blending of PA 6 were cracked, whereas the test pieces of Examples 1 through 4 and 9 through 12 that adopt the blinding of PA 6 were not cracked.

It will thus be seen that Examples 1 through 4 as well as Examples 9 through 12 that employ MXD 6 in admixture with PA 6 have the advantage over Comparative Example 1 which employs PA 6-free MXD 6 in terms of expanded tube cracking resistance and cold temperature impact resistance.

(2) Example in which the amount of PA 6 to be blended is set to be greater than or equal to 10% by weight relative to the total amount of the barrier layer has the advantage over Comparative Example.

This is apparent from the following results. That is, according to the expanded tube cracking resistance test (23 °C) results, some test pieces of Comparative Examples 4 and 5 having the PA 6 content of 5% by weight were cracked, whereas no test piece of Examples 1 and 5 having the PA 6 content of 10% by weight was cracked. Moreover, according to the cold temperature impact test (305 mm) results, some test pieces of Comparative Example 5 were cracked, whereas no test piece of Example 5 was cracked. Further, according to the cold temperature impact test (610 mm) results, some test pieces of Comparative Example 4 were cracked, whereas no test piece of Example 1 was cracked.

It will thus be seen that Examples 1 and 5 having the PA 6 content of greater than or equal to 10% by weight has the advantage over Comparative Examples 4 and 5 having the PA 6 content of less than 10% by weight in terms of expanded tube cracking resistance and cold temperature impact resistance.

(3) Example in which PA 6 has a flexural modulus of lower than or equal to 2000 MPa has the advantage over Comparative Example.

This is apparent from the following results. That is, according to the expanded tube cracking resistance test (23 °C) results, occurrence of cracking was observed in Comparative Examples 2 and 3 in which PA 6 has a flexural modulus of 2500 MPa, whereas occurrence of cracking was observed neither in Examples 1 and 3 in which PA 6 has a flexural modulus of 1600 MPa nor in Examples 9 and 11 in which PA 6 has a flexural modulus of 520 MPa. Moreover, according to the cold temperature impact test (610 mm) results, occurrence of cracking was observed in Comparative Examples 2 and 3, whereas occurrence of cracking was not observed in any of Examples 1, 3, 9, and 11.

It will thus be seen that Examples 1, 3, 9, and 11 in which PA 6 has a flexural modulus of lower than or equal to 2000 MPa have the advantage over Comparative Examples 2 and 3 in which PA 6 has a flexural modulus of greater than 2000 MPa in terms of expanded tube cracking resistance and cold temperature impact resistance.

In addition, the following points (4) through (7) will be found out by making a comparison between Examples.

(4) Example in which the amount of PA 6 to be blended is set to be greater than or equal to 15% by weight relative to total amount of the barrier layer is superior to Example in which the amount of PA 6 to be blended is set to be less than 15% by weight relative to the total amount of the barrier layer.

This is apparent from the following results. That is, according to the expanded tube cracking resistance test (0 °C) results, occurrence of cracking was observed in both of Examples 1 and 5 in which the amount of PA 6 to be blended is set at 10% by weight, whereas occurrence of cracking was observed in neither of Examples 2 and 6 in which the amount of PA 6 to be blended is set at 15% by weight. Moreover, according to the cold temperature impact test (610 mm) results, all of the test pieces of Example 5 were cracked, whereas no test piece of Example 6 was cracked.

It will thus be seen that Examples 2 and 6 in which the amount of PA 6 to be blended is set at 15% by weight have the advantage over Examples 1 and 5 in which the amount of PA 6 to be blended is set at 10% by weight in terms of expanded tube cracking resistance and cold temperature impact resistance.

(5) Example in which the barrier layer has a thickness of smaller than or equal to 0.2 mm is superior to Example in which the barrier layer has a thickness of greater than 0.2 mm.

This is apparent from the following results. That is, according to the expanded tube cracking resistance test (0 °C) results, all of the test pieces of Example 5 having the 0.3mm-thick barrier layer were cracked, whereas 7 out of 10 test pieces of Example 1 having the 0.1 mm-thick barrier layer were cracked. Moreover, according to the cold temperature impact test (610 mm) results, all of the test pieces of Example 5 were cracked, whereas no test piece of Example 1 was cracked.

It will thus be seen that Example 1 having the thinner barrier layer has the advantage over Example 5 having the thicker barrier layer in terms of expanded tube cracking resistance and cold temperature impact resistance. It is especiallypreferable that the thickness of the barrier layer is set to be smaller than or equal to 0.2 mm.

(6) Example that employs PA 6 which has not been subjected to a plasticizer-using softening treatment is superior to Example that employs PA 6 which has been subjected the plasticizer-using softening treatment.

This is apparent from the following results. That is, according to the expanded tube cracking resistance test (23 °C) results, some test pieces of Example 21 that employs PA 6 whose flexural modulus was adjusted to be 600 MPa through the plasticizer-using softening treatment were cracked, whereas no test piece of Example 1 that employs PA 6 having a flexural modulus of 1600 MPa on which no plasticizer-using softening treatment was performed was cracked in spite of the fact that its PA 6 flexural modulus is higher than that of Example 21.

It will thus be seen that Example 1 in which there is absent a plasticizer has the advantage over Example 21 in which there is present a plasticizer in terms of expanded tube cracking resistance. Accordingly, it is desirable to avoid the use of a plasticizer in the softening treatment.

(7) Example in which PA 6 has a flexural modulus of lower than or equal to 1000 MPa is superior to Example in which PA 6 has a flexural modulus of greater than 1000 MPa.

This is apparent from the following results. That is, according to the expanded tube cracking resistance test (0 °C) results and the cold temperature impact test (610 mm) results, some test pieces of Examples 1 through 4 and Examples 5 through 8 in which PA 6 has a flexural modulus of 1600 MPa were cracked, whereas none of the test pieces of Examples 9 through 12 and Examples 13 through 16 in which PA 6 has a flexural modulus of 520 MPa were cracked. Note that the above is true for the case of conducting no plasticizer-using softening treatment.

It will thus be seen that Examples 9 through 12 and Examples 13 through 16 in which PA 6 has a flexural modulus of 520 MPa have the advantage over Examples 1 through 4 and Examples 5 through 8 in which PA 6 has a flexural modulus of 1600 MPa in terms of expanded tube cracking resistance and cold temperature impact resistance.

Next, a test of fuel permeation resistance has been conducted on each of Examples 1, 3, 4, 9, 11, 12, 13, 15, 16, 22 through 24, and Comparative Examples 1 and 6 in the following manner.

[Fuel permeation resistance test]

Four pieces of tubes cut to a length of 500 mm are prepared for use. Three out of the four tubes are each made to have a metal blank cap attached to one end thereof. Then, a fuel is fed into each of the three tubes in an amount equivalent to 75% of the inner capacity of the tube. After that, another metal blank cap is attached to the other end of the tube, whereupon the fuel is confined within the tube. Those tubes having the sealed-in fuel are defined as a sample 1 (S1), a sample 2 (S2), and a sample 3 (S3), respectively. The fuel in use is of a fluid prepared by blending ethanol into a Fuel C in such a manner that the content of ethanol accounts for 10% by volume of the total volume of the fuel. The Fuel C is composed of a fluid mixture of ASTM D471-compliant toluene and isooctane 1:1 ratio by volume.

The remaining one of the tubes is kept empty of the fuel, and the metal blank cap is attached to both ends thereof. This tube is defined as a blank (B).

After being subjected to initial weight measurement on an individual basis, the samples S1 S2, and S3 and the blank B are left standing in an air oven heated at 60°C. Then, the samples S1, S2, and S3 and the blank B taken out of the air oven at regular time intervals are allowed to reach a room temperature, and their weights are measured by means of a balance. After that, the samples S1, S2, and S3 and the blank B are placed in the air oven heated at 60 °C once again, and the subsequent operations are repeated.

On the basis of a decrease in weight, the amount of permeation is determined by calculation in accordance with the following method. Note that a numerical value corresponding to the amount of permeation ($g/m^2$/day) that reached a level of saturation is adopted. The results of the calculation are given in Table 3.

<Calculation method>

A decrease in weight W1y (g) (after X days to after Y days)

$$W1y = \{(S1x - S1y) + (S2x - S2y) + (S3x - S3y)\} \div 3 - (Bx - By) \quad (1)$$

the amount of permeation W2y per inner surface area of the tube ($g/m^2$) (after X days to after Y days)

$$W2y = W1y \div [\text{the area of tube's inner surface } (m^2)] \quad (2)$$

wherein
the area of tube's inner surface (m$^2$) = [the circumference

$$\text{of tube's inner surface (m)}] \times [\text{tube's length (m)}] \quad (3)$$

the speed of permeation = the amount of permeation

$$\text{(g/m}^2\text{/day)} = W2y \div (Y - X) \quad (4)$$

[Bx: the weight of the blank (g) after X days, S1x: the weight of S1 (g) after X days, S2x: the weight of S2 (g) after X days, S3x: the weight of S3 (g) after X days, By: the weight of the blank (g) after Y days, S1y: the weight of S1 (g) after Y days, S2y: the weight of S2 (g) after Y days, S3y: the weight of S3 (g) after Y days (wherein the relationship: X < Y holds)]

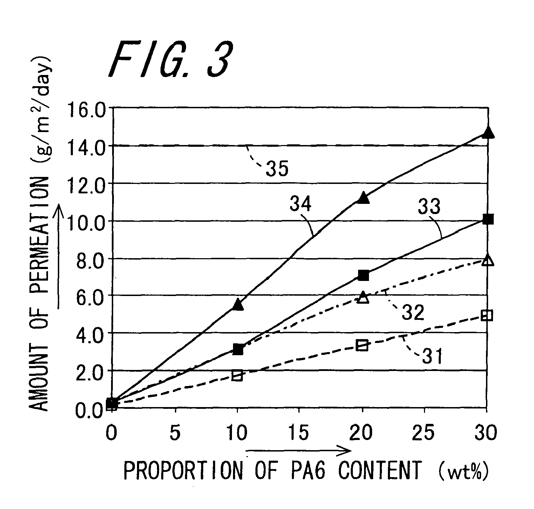

Fig. 3 is a view showing the relationship between the amount of permeation and the proportion of PA 6 content. The amount of permeation (g/m$^2$/day) is taken along the vertical axis, and the proportion of PA 6 content (% by weight) is taken along the horizontal axis. A line chart 31 indicates the relationship between the amount of permeation and the proportion of PA 6 content derived from the results of measurement on Examples 22 through 24 under the condition that the to-be-blended PA 6 has a flexural modulus of 1600 MPa and the barrier layer has a thickness of 0.2 mm. A line chart 32 indicates the relationship between the amount of permeation and the proportion of PA 6 content derived from the results of measurement on Examples 13, 15, and 16 under the condition that the to-be-blended PA 6 has a flexural modulus of 520 MPa and the barrier layer has a thickness of 0.2 mm. A line chart 33 indicates the relationship between the amount of permeation and the proportion of PA 6 content derived from the results of measurement on Examples 1, 3, and 4 under the condition that the to-be-blended PA 6 has a flexural modulus of 1600 MPa and the barrier layer has a thickness of 0.1 mm. A line chart 34 indicates the relationship between the amount of permeation and the proportion of PA 6 content derived from the results of measurement on Examples 9, 11, and 12 under the condition that the to-be-blended PA 6 has a flexural modulus of 520 MPa and the barrier layer has a thickness of 0.1 mm. A straight line segment 35 indicates the amount of permeation as observed in the case of using Comparative Example 6.

As will be understood from Fig. 3, the tube provided with the barrier layer formed by blending the flexible resin (PA 6) having a flexural modulus of lower than or equal to 2000 MPa into the metaxylylene group-containing polyamide resin (MXD 6) in such a manner that the flexible resin accounts for 10% to 30% by weight of the total amount of the barrier layer (Example) is, in terms of permeation speed, substantially equal to or lower than the tube of prevailing type provided with the ETFE-made layer having sufficiently high fuel permeation resistance (Comparative Example 6) . That is, Example is excellent in fuel permeation resistance.

Lastly, in regard to each of Examples 1 and 25 and Comparative Examples 6 and 7, the amount of leached-out insoluble substance in the fuel was measured in accordance with the following method to measure the amount of-insoluble substance.

[Insoluble substance amount measurement method]

A metal blank cap is attached to one end of a tube cut to a length of 1000 mm. A fuel is fed into the tube in an amount equivalent to 90% of the inner capacity of the tube. After that, another metal blank cap is attached to the other end of the tube, whereupon the fuel is confined within the tube. The fuel in use is of a fluid prepared by blending methanol into a Fuel C in such a manner that the content of methanol accounts for 15% by volume of the total volume of the fuel. The Fuel C is composed of a fluid mixture of ASTM D471-compliant toluene and isooctane 1:1 ratio by volume. The tube having the sealed-in fuel is left standing in an air oven heated at 60°C for 168 hours. The tube taken out of the air oven is left to cool at a room temperature until it reaches the room temperature. The fuel within the tube is poured into a well-dried beaker. Then, a new fuel is fed into the tube to clean the inner surface thereof, and the fuel is poured into the same beaker. This cleaning process is repeated three times. Subsequently, with use of filter paper (mesh size: 0.45 $\mu$m, diameter: 47 mm) whose weight is measured in advance, the fuel collected in the beaker is filtered. The filter paper having been used for the filtration process is left to dry in a chamber with constant temperature and humidity under the conditions of a room temperature (23 °C) and a relative humidity of 50 RH% for 24 hours. After that, the weight of the filter paper is measured. On the basis of the measured weight of the filter paper, the amount of leached-out insoluble substance in the fuel was calculated in accordance with the following calculation method. The results of the calculation are given in Table 3.

$$W = Wa - Wo \quad (5)$$

[W: the amount of leached-out insoluble substance in the fuel (mg), Wa: the weight of the filter paper having been dried off in the chamber with constant temperature and humidity at a relative humidity of 50 RH% for 24 hours after the filtration process (mg), Wo: the weight of the filter paper prior to the filtration process (mg)]

Table 3

|  | Amount of leached-out insoluble substance in fuel (mg) |
|---|---|
| Ex. 1 | 15 |
| Ex. 25 | 3 |
| Comp. Ex. 6 | 3 |
| Comp. Ex. 7 | 40 |

As will be understood from Table 3, in terms of the amount of leached-out insoluble substance in the fuel, the tube having its first layer formed of low oligomer PA 11 which is a resin material washed with hot water or alcohol (Example 25) is smaller than the tube having its first layer formed of PA 11 which has not been subjected to the hot water- or alcohol-using cleaning process (Example 1 and Comparative Example 7) but is substantially equal to the tube having its first layer formed of ETFE (Comparative Example 6). It has been known that such a tube as has its first layer formed of ETFE incurs lesser degree of the leaching of a low-molecular-weight substance or the like from resin. That is, it will thus be seen that the tube having its first layer formed of low oligomer PA 11 which is a resin material washed with hot water or alcohol (Example 25) also incurs lesser degree of the leaching of a low-molecular-weight substance or the like from resin.

In light of the foregoing, the tube having its first layer formed of low oligomer PA 11 which is a resin material washed with hot water or alcohol (Example 25) can suitably be used as fuel piping, because it is free from the elution of a low-molecular-weight substance contained in the flexible resin. Accordingly, it is preferable that the first layer is formed of a resin material which has been washed with hot water or alcohol.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

**Claims**

1. A tube comprising:

   at least a barrier layer that includes metaxylylene group-containing polyamide resin and flexible resin which exhibits compatibility with the metaxylylene group-containing polyamide resin and is softer than the metaxylylene group-containing polyamide resin,

   wherein a content of the flexible resin falls in a range of from 10% to 30% by weight of a total amount of the barrier layer, and wherein the flexible resin has a flexural modulus of smaller than or equal to 2000 MPa, as measured in accordance with ASTM D790 at a temperature of 23 °C in an absolute dry condition.

2. The tube of claim 1, wherein the thickness of the barrier layer is set to fall in a range of from 0.05 mm to 0.3 mm.

3. The tube of claim 1 or 2, further comprising a polyamide resin layer containing polyamide resin.

4. The tube of claim 3, wherein an innermost layer of the tube is composed of a resin material which has been washed with hot water or alcohol.

5. The tube of claim 4, wherein the resin material which has been washed with hot water or alcohol is either polyamide 11 or polyamide 12.

6. The tube of any one of claims 3 to 5, wherein the innermost layer is made to exhibit electrical conductivity.

7. The tube of any one of claims 1 to 6, wherein the flexible resin is any of polyamide resin, polyamide resin containing at least elastomer or rubber, and a mixture thereof.

8. The tube of any one of claims 1 to 7, wherein a certain part of the section of the tube taken along its length is processed into a corrugated configuration.

FIG. 1

## *FIG. 2*

FIG. 3

**European Patent Office**

**EUROPEAN SEARCH REPORT**

Application Number

EP 07 25 2805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 592 732 A (NITTA MOORE CO LTD [JP]) 20 April 1994 (1994-04-20) * page 4, lines 29-54 * * claim 1 * ----- | 1-8 | INV. B32B27/34 F16L9/12 F16L11/04 |
| A | DATABASE WPI Week 200605 Derwent Publications Ltd., London, GB; AN 2006-042936 XP002463081 & JP 2005 351364 A (BRIDGESTONE CORP) 22 December 2005 (2005-12-22) * abstract * ----- | 1 | |
| X | DATABASE WPI Week 200579 Derwent Publications Ltd., London, GB; AN 2005-778909 XP002463082 & WO 2005/097903 A (BRIDGESTONE CORP) 20 October 2005 (2005-10-20) * abstract * ----- | 1 | |
| A | DATABASE WPI Week 200337 Derwent Publications Ltd., London, GB; AN 2003-384472 XP002463083 & JP 2002 254581 A (UBE IND LTD) 11 September 2002 (2002-09-11) * abstract * ----- | 1-8 | TECHNICAL FIELDS SEARCHED (IPC) B32B F16L |

The present search report has been drawn up for all claims

| Place of search | Date of completion of the search | Examiner |
|---|---|---|
| Munich | 20 December 2007 | Schweissguth, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 886 810 A1**

## ANNEX TO THE EUROPEAN SEARCH REPORT
## ON EUROPEAN PATENT APPLICATION NO.

EP 07 25 2805

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2007

| Patent document cited in search report | | Publication date | Patent family member(s) | | Publication date |
|---|---|---|---|---|---|
| EP 0592732 | A | 20-04-1994 | US | 5330810 A | 19-07-1994 |
| JP 2005351364 | A | 22-12-2005 | NONE | | |
| WO 2005097903 | A | 20-10-2005 | NONE | | |
| JP 2002254581 | A | 11-09-2002 | JP | 3982228 B2 | 26-09-2007 |

For more details about this annex : see Official Journal of the European Patent Office, No. 12/82

**EP 1 886 810 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4272592 A